# EUROPEAN PATENT APPLICATION

(11) **EP 4 254 595 A1**
(43) Date of publication of application: **04.10.2023**
(21) Application number: 23165679.4
(22) Date of filing: 30.03.2023
(51) Int. Cl.: H01M 10/42, H01M 10/48, H01M 10/613, H01M 10/63, H01M 10/6555, H01M 10/6557, H01M 50/317, H01M 50/358, H01M 50/375, H01M 50/383, H01M 50/30, H01M 50/581, H01M 50/583

(54) **BATTERY SAFETY SYSTEM AND METHOD**

(30) Priority: 31.03.2022 GB 202204735
(71) Applicant: Artemis Technologies Limited, Salisbury Wiltshire SP1 2SB (GB)
(72) Inventor: WILLIAMS, Simon, Salisbury, SP1 2SB (GB); MCGAHAN, Paul, Salisbury, SP1 2SB (GB)
(74) Representative: Torrance, Bruce James

(57) **Abstract**

There is provided methods and systems for improving the safety of a battery. The system is directed towards a plurality of sensors for providing sensor data, a battery management system for comparing one or more parameters associated with the sensor data to a corresponding threshold value, a first thermal regulation system, and a second thermal regulation system. The system configures the first thermal regulation system in response to the comparison, and the second thermal regulation system is configured if any of the one or more parameters exceeds the corresponding threshold value.

## Description

### FIELD OF INVENTION

The present disclosure generally relates to battery technology for use with yachts, sailboats, ships, and other waterborne vessels. In particular, the present disclosure relates to ensuring the safety of such batteries.

### BACKGROUND OF THE INVENTION

The recent advances in electricity-powered transport systems and portable devices have led to increased use of batteries. Lithium-ion (Li-ion) batteries, for example, have been a popular choice in many fields of technologies as they provide several advantages, including high energy density, low self-discharge rate, no memory effect, and high number of chargedischarge cycles.

However, an increasing use of batteries has also led to increased level of safety concerns. In particular, Li-ion batteries are susceptible to overheating due to chemical heat generation and joule heating from the internal resistance of battery cells. Unchecked, this may lead to thermal runway where an exothermic reaction triggers a chain reaction of further exothermic reactions in other areas of the battery. For Li-ion batteries, thermal runaway may ultimately result in fire, explosion, and/or off-gas generation.

A thermal runaway event may be initiated if a battery undergoes mechanical, electrical and/or thermal abuses, and so it is important to ensure that batteries are equipped with suitable mitigation measures for preventing such abuse conditions. For example, the risk of mechanical abuse, such as deformation of the battery, may be decreased by providing measures for reducing the impact of mechanical shock on battery cells. The risk of electrical abuse may be decreased through the use of safety circuits to prevent over-charging and over-discharging of the battery. The risk of thermal abuse may be decreased by providing cooling systems for maintaining the cell temperature of the battery within its safe operation temperature range.

Furthermore, as the heat generated during the thermal runaway of a battery cell may trigger the thermal runaway of adjacent or nearby cells in a chain reaction, it is also important to implement suitable safety measures that prevent such a chain reaction from becoming established within a battery. The abovementioned mitigation measures can be particularly important for on-board battery systems, such as maritime vessels and automotive vehicles, as battery cells in such environments have a higher chance of undergoing mechanical, electrical and/or thermal abuses.

It would therefore be desirable to provide a battery system that is able to determine when a thermal runaway event may occur and to be configurable to mitigate the risk of thermal runaway occurring and/or to limit the consequences when thermal runaway does occur.

### SUMMARY OF THE INVENTION

The invention is defined by the claims to which reference should now be made. Preferred features are outlined in the dependent claims.

According to a first aspect of the invention, there is provided a method for a battery safety system comprising receiving sensor data relating to one or more battery modules, comparing one or more parameters associated with the sensor data to a corresponding threshold value, configuring a first thermal regulation system in response to the comparison, and configuring a second thermal regulation system if any of the one or more parameters exceeds the corresponding threshold value.

Comparing one or more of the parameters associated with the sensor data to the corresponding threshold value can advantageously enable the system and/or a user of the system to determine the stage of a current and/or potential fire event. For example, one or more of the parameters exceeding the threshold value may be indicative of a thermal runaway event. Similarly, one or more of the parameters being close to the threshold value and/or outside their usual range during normal operation may be an indication of a potential or imminent fire.

Based on the determined stage of a current and/or potential fire event, two regulation systems, namely the first and second thermal regulation systems, may be configured. This enables deployment of mitigation measures that are suitable for the determined stage of a current and/or potential fire event. For example, the first thermal regulation system may be configured to reduce the fire risk during the normal operation (i.e. pre-fire event), whereas the second thermal regulation system may be configured to minimise the damage caused during and after a thermal runaway event.

In some embodiments, configuring the first thermal regulation system and/or the second thermal regulation system decreases the temperature of one or more battery cells in at least one of the battery modules. This advantageously reduces the likelihood of a thermal runaway event occurring, and/or limits the effect of a thermal runaway event.

In some embodiments, the first thermal regulation system comprises a cooling circuit that provides coolant to one or more battery modules to thereby decrease the temperature of the one or more battery modules. This advantageously enables thermal energy to be efficiently removed from the battery to reduce the likelihood of a thermal runaway event occurring, and/or limit the effect of a thermal runaway event.

In some embodiments, the second thermal regulation system configures the cooling circuit to provide maximum cooling power to at least one of the battery modules. This advantageously enables a concentration of resources to one or more battery modules in order to limit the effect of a thermal runaway event

In some embodiments, the first thermal regulation system controls the electric current provided to and/or from at least one of the battery modules. This advantageously enables one or more battery modules to be electrically isolated, and so limit the further production of thermal energy to thereby reduce the likelihood of a thermal runaway event occurring, and/or limit the effect of a thermal runaway event.

In some embodiments, the first thermal regulation system is configured based on the sensor data indicating the presence of an off-gas. This advantageously enables the early prediction of a thermal runaway event, allowing early action to be taken to thereby reduce the likelihood of a thermal runaway event occurring.

In some embodiments, the second thermal regulation system is configured to provide one or more fire suppressant materials to the one or more battery modules. This advantageously enables thermal energy to be efficiently removed from the battery to reduce the likelihood of a thermal runaway event occurring, and/or limit the effect of a thermal runaway event. Additionally, thermal energy is prevented from spreading between one or more battery modules, further limiting the effect of a thermal runaway event.

In some embodiments, at least a component of the first thermal regulation system and/or second thermal regulation system can be manually controlled by a user. This advantageously enables a user to manually override automatic functionality, or to pre-emptively take action in anticipation of a thermal runaway event.

In some embodiments, configuring the first thermal regulation system reduces the likelihood of the one or more parameters exceeding the corresponding threshold value. This advantageously reduces the likelihood of a thermal runaway event occurring.

Other embodiments further comprise calculating the one or more parameters based on the sensor data. This advantageously enables the gathering of information related to the status of one or more battery modules.

In some embodiments, the parameters comprise one or more of: electrical parameters associated with at least one battery module, and temperature parameters associated with at least one battery module. This advantageously provides information relating to the electrical and thermal status of one or more battery modules.

In some embodiments, the parameters are associated with one or more of a state of charge for one or more battery modules; a state of health for one or more battery modules; a state of function for one or more battery modules; the power availability for one or more battery modules; a total power cycles for one or more battery modules; an energy throughput for one or more battery modules; a cell impedance for one or more battery modules; and the battery core temperature for one or more battery modules. This advantageously enables the determination of the likelihood of a thermal runaway event occurring, and/or the extent of a thermal runaway event in one or more battery modules.

In some embodiments, each parameter is associated with one or more operation values that define a safe operation range for the battery. This advantageously enables the determination of the likelihood of a thermal runaway event occurring.

In some embodiments, one or more of the parameters exceeding the corresponding operation values is indicative of mechanical, electrical, and/or thermal abuse conditions.

In some embodiments, one or more of the parameters exceeding the corresponding threshold value is indicative of a thermal runaway event.

Other embodiments further comprise electrically isolating one or more battery modules with a manual service disconnect. This advantageously provides electrical isolation to one or more battery modules, and so limits the further production of thermal energy to thereby reduce the likelihood of a thermal runaway event occurring, and/or limit the effect of a thermal runaway event.

Other embodiments further comprise providing one or more internal barriers between adjacent battery modules to reduce the propagation of thermal energy. This advantageously impedes thermal energy from propagating between adjacent battery modules to thereby limit a thermal runaway event in a first battery module affecting an adjacent battery module.

Optionally, at least one of the parameters may have a safe range. In such cases, one or more of the parameters being outside the corresponding safe range indicates an elevated fire risk. The safe range may be determined based on the typical values of the corresponding parameters during normal operation. The safe range may also be used in combination with the threshold value. For example, one or more of the parameters having a value between the threshold value and the highest value of safe range may be an indication of a potential or imminent fire.

Optionally, one or more of the parameters exceeding the corresponding threshold value may indicate a current fire event. The threshold value may be a minimum value of the corresponding parameter that can cause a fire. The threshold value may a pre-determined constant. Alternatively, the threshold value may be a variable dependent on the current values of one or more parameters.

Optionally, the first thermal regulation system may be configured to regulate at least one of the parameters in order to keep them within the corresponding safe range. Keeping the parameters within the safe range can prevent thermal and electrical abuses, and also prolong the lifespan of the battery.

Optionally, at least one of the parameters having a value outside the corresponding safe range may be indicative of mechanical, electrical, and/or thermal abuses. This enables determination of the presence of potential mechanical, electrical, and/or thermal abuses, and hence, can provide an early indication of a potential fire.

Optionally, the parameters may comprise one or more of: electrical parameters of at least a part of the battery module, temperatures of at least a part of the battery module, and composition of gas within at least a part of the battery module.

According to a second aspect of the invention, there is provided a battery safety system comprising a plurality of sensors for providing sensor data relating to one or more battery modules, a battery management system for comparing one or more parameters associated with the sensor data to a corresponding threshold value, and a first thermal regulation system and a second thermal regulation system, wherein the first thermal regulation system is configured in response to the comparison, and the second thermal regulation system is configured if any of the one or more parameters exceeds the corresponding threshold value.

The advantages associated with the second aspect of the invention are the same as those described above for the first aspect of the invention.

In some embodiments, the plurality of sensors includes one or more off-gas sensors. This advantageously enables the early prediction of a thermal runaway event, allowing early action to be taken to thereby reduce the likelihood of a thermal runaway event occurring.

In some embodiments, one or more of the first thermal regulation system and the second thermal regulation system comprises a cooling circuit configured to remove thermal energy from one or more battery modules.

Other embodiments further comprise a battery thermal management system configured to control the cooling circuit. This advantageously enables efficient removal of thermal energy from one or more identified battery modules.

In some embodiments, the cooling circuit comprises one or more cooling plates. This advantageously enables thermal energy to be efficiently removed from the battery to reduce the likelihood of a thermal runaway event occurring, and/or limit the effect of a thermal runaway event. Using cooling plates, which have large surface-area-to-volume ratios, for cooling the batteries can be advantageous as the large surface areas further enables rapid heat exchange. Furthermore, positioning the cooling plates between two or more of the battery modules enables simultaneous and uniform cooling for multiple battery modules.

In some embodiments, the first thermal regulation system comprises at least one electrical current interrupting device configured to interrupt electric current to the one or more battery modules.

In some embodiments, the one or more current interrupting devices comprises a high voltage contactor, a fuse, and/or a pyrotechnic fuse. This enables electrical isolation of one or more battery modules to occur efficiently and/or to be triggered remotely.

In some embodiments, the second thermal regulation system comprises a fire suppressant module configured containing a first fire suppressant material.

In some embodiments, the first fire suppressant material is a fire suppressant aerosol.

In some embodiments, the second thermal regulation system comprises one or more dry break couplings configured to provide a second fire suppressant material to the one or more battery modules. This advantageously enables the second fire suppressant material to be obtained externally and provided to the one or more battery modules via the dry break couplings.

In some embodiments, the second fire suppressant material is fresh water or a firesuppressant foam.

Other embodiments further comprise one or more valves configured to enable the release of an off-gas, the one or more valves being in communication with an off-gas ventilation manifold. This advantageously prevents the build-up of toxic and combustible gases within a battery enclosure, and enables those gases to be vented into the atmosphere in a safe manner away from crew members.

According to a third aspect of the invention there is provided a battery system comprising one or more battery modules, a plurality of sensors for providing sensor data relating to the one or more battery modules, a battery management system for comparing one or more parameters associated with the sensor data to a corresponding threshold value, and a first thermal regulation system and a second thermal regulation system, wherein the first thermal regulation system is configured in response to the comparison, and the second thermal regulation system is configured if any of the one or more parameters exceeds the corresponding threshold value.

The advantages associated with the third aspect of the invention are the same as those described above for the first and second aspects of the invention.

Some embodiments further comprise a battery rack support structure configured to receive the one or more battery modules to form a battery rack. This advantageously provides a modular and scalable battery structure, which enables the capacity and shape of the battery system to be customised depending on the use-case. Such modular structures can also be advantageous for easy maintenance.

Other embodiments further comprise at least one flexible connector between adjacent battery racks. Using flexible interconnectors, such as braided straps, instead of rigid interconnects, such as bus bars, advantageously reduces the overall rigidity of the battery structure. This can be advantageous for accommodating impacts of mechanical or physical shocks and stresses without damaging the battery structure.

Other embodiments further comprise a liquid absorption pad. This advantageously controls the humidity within the battery system and absorbs spilt liquids that may otherwise cause damage to the battery.

Other embodiments further comprise a battery enclosure for containing the sensors and battery modules. The enclosure advantageously protects one or more battery modules, and prevents the ingress of oxygen into the enclosure to thereby reduce the likelihood of a fire from occurring.

In some embodiments, the battery enclosure provides protection against the ingress of fluid and/or particles from outside of the enclosure. This advantageously ensures the enclosure provides ingress protection against fluid and/or particles from outside of the enclosure. Such ingress protection improves accuracy of internal gas composition measured by the sensors, and prevents malfunctions caused by foreign fluid and particles from outside of the enclosure.

In some embodiments, at least one of the battery modules comprises at least one Li-ion battery cell.

In some embodiments, the plurality of sensors includes one or more off-gas sensors.

In some embodiments, one or more of the first thermal regulation system and the second thermal regulation system comprises a cooling circuit configured to remove thermal energy from one or more battery modules.

Other embodiments further comprise a battery thermal management system configured to control the cooling circuit.

In some embodiments, the cooling circuit comprises one or more cooling plates.

In some embodiments, the first thermal regulation system comprises at least one electrical current interrupting device configured to interrupt electric current to the one or more battery modules.

In some embodiments, the one or more current interrupting devices comprises a high voltage contactor, a fuse, and/or a pyrotechnic fuse.

In some embodiments, the second thermal regulation system comprises a fire suppressant module configured containing a first fire suppressant material.

In some embodiments, the first fire suppressant material is a fire suppressant aerosol.

In some embodiments, the second thermal regulation system comprises one or more dry break couplings configured to provide a second fire suppressant material to the one or more battery modules.

In some embodiments, the second fire suppressant material is fresh water or a firesuppressant foam.

Other embodiments further comprise one or more valves configured to enable the release of an off-gas, the one or more valves being in communication with an off-gas ventilation manifold.

### BRIEF DESCRIPTION OF THE DRAWINGS

The invention will be described in more detail, by way of example, with reference to the accompanying drawings, in which:
Figure 1 is a schematic diagram of a waterborne vessel that incorporates aspects of the present invention;
Figure 2 is a schematic diagram of an example electrical energy storage and distribution system suitable for implementing on a waterborne vessel;
Figure 3 is a diagram of an example battery rack according to aspects of the present invention;
Figure 4 is diagram of an example cooling plate according to aspects of the present invention;
Figure 5 is a diagram an of an example cooling system according to aspects of the present invention;
Figure 6A is a diagram of a simulation of the thermal energy propagation within a first battery rack when no additional cooling is provided;
Figure 6B is a diagram of a simulation of the thermal energy propagation within a second battery rack that is provided with additional cooling power according to aspects of the present invention;
Figure 7 is a diagram of a battery system according to aspects of the present invention;
Figure 8 is a diagram of a safety process according to aspects of the present invention;
Figure 9 is a schematic diagram of an example BMS system according to aspects of the present invention;
Figure 10 is a diagram of an example process undertaken by an example BMS system according to aspects of the present invention; and
Figure 11 is a schematic diagram of an example BTMS system according to aspects of the present invention.

The above figures are included to provide illustration and a further understanding of the various aspects and embodiments, and are incorporated in and constitute a part of this specification, but are not intended as a definition of the limits of the invention. In the figures, each identical or nearly identical component that is illustrated in various figures is represented by a like numeral. For purposes of clarity, not every component may be labelled in every figure.

### DETAILED DESCRIPTION

It is to be appreciated that embodiments of the systems and methods discussed herein are not limited in application to the details of construction and the arrangement set forth in the following description or illustrated in the accompanying drawings. The systems and methods are capable of implementation in other embodiments and of being practiced or of being carried out in various ways. Examples of specific implementations are provided herein for illustrative purposes only and are not intended to be limiting. Also, the phraseology and terminology used herein is for the purpose of description and should not be regarded as limiting. The use herein of "including," "comprising," "having," "containing," "involving," and variations thereof is meant to encompass the items listed thereafter and equivalents thereof as well as additional items. References to "or" may be construed as inclusive so that any terms described using "or" may indicate any of a single, more than one, and all of the described terms.

Aspects and embodiments described herein generally relate to a battery safety system and method for use with yachts, sailboats, ships, and other waterborne vessels.

### BATTERY SYSTEM

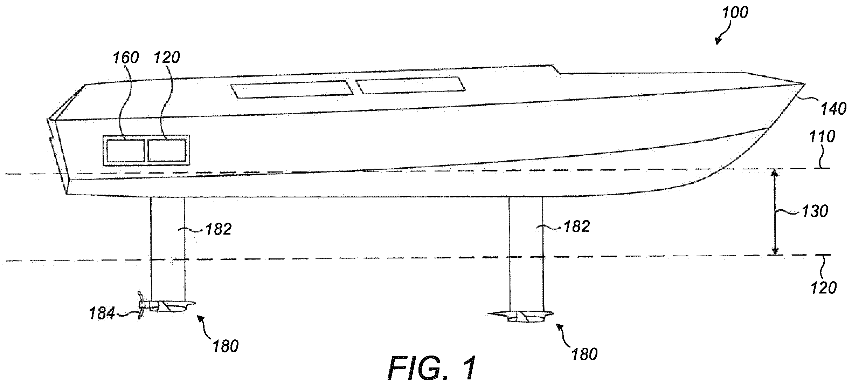

Figure 1 shows a waterborne vessel in the form of a monohulled vessel 100 provided with a hydrofoil system. The hydrofoil system comprises a controller 120 located within the hull 140 of vessel 100. A battery system 160 in accordance with the present invention is located adjacent controller 100, and in electrical communication with controller 120. A foil 180 is located on the outer surface of the foil hull below the floating waterline 110. The foil 180 is connected to the hull 140 of vessel 100 by means of a vertical shaft 182, and a propeller 184 is mounted on the foil 180 for driving the vessel 100 through the water during travel.

The foil 180 may comprise a plurality of adjustment members operable to vary the lift characteristics of the vessel 100 during travel. Each adjustment member comprises a flap and associated actuator. Actuators can be either electric or hydraulic and may be integrated within foil 180 (as shown in figure 1) or may be located within the vessel 100 itself depending on the vessel size and associated foil size. Actuators operate to control the position of associated flaps to control the ship in heave (i.e. the ride height 130 relative to the floating water line 110), as well as the pitch, roll and thrust. Ride height 130 is shown in figure 1 and is based on the distance between the water surface (floating water line 110) and the foiling water line 120. Foiling water line refers to where the water free surface sits, relative to the foils/hull, while the boat is airborne. When the boat is floating, the water line is defined by how much the hull needs to sink to obtain the volume of displacement (under Archimedean hydrostatic force). When foiling, the foiling water line is the optimum between minimum foil immersion (the vertical part "shaft") to reduce drag without having the elevator ventilating because of the free surface proximity.

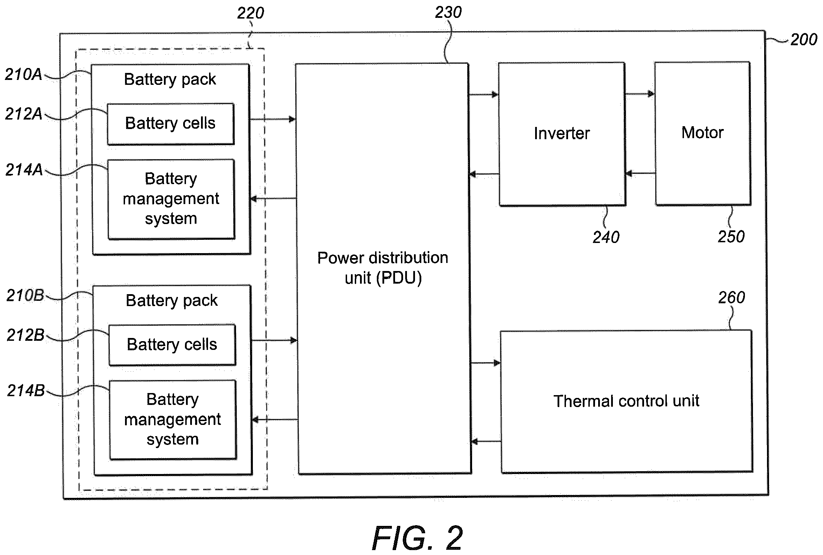

Figure 2 shows a schematic diagram of an electrical energy storage and distribution system 200 that may form part of the waterborne vessel of Figure 1. As shown in Figure 2, the electrical energy storage and distribution system 200 may comprise a plurality of battery packs 210 that form a battery rack 220, a power distribution unit (PDU) 230, an inverter 240, a motor 250, and a thermal control unit 260. Each battery pack 110 includes a plurality of battery cells 212 and a battery management system 214.

In the example shown in Figure 2, the PDU 230 controls and distributes the electrical power stored in the battery packs 210. This may be achieved by the PDU 230 interfacing with battery pack 210A and battery pack 210B in order to distribute the electrical power to an electrical motor 250 for driving propellor 184 via an inverter 240, which converts the DC power supply from the battery packs 210 into an AC power supply. Thermal control unit 260 interfaces with the PDU 230 to monitor and regulate the temperature of the battery packs 210.

In some embodiments, the PDU 230 may also distribute electrical power to other electrical systems such as electrical displays, climate control systems, navigation and steering systems, etc. In some embodiments the PDU 230 may also provide protection against short circuits and current leaks.

A plurality of battery cells 210 may be combined to provide a battery module (not shown), and a plurality of battery modules may be combined to provide the battery pack 210.

Preferably, the battery cells 212 are Nickel-Manganese-Cobalt (NMC) Lithium-Ion pouch cells, having a capacity of 65Ah and operating voltage range between 2.5V and 4.2V. In preferred embodiments, each battery module may comprise 12 battery cells having two pieces of six cells in series (i.e. a 6s2p configuration) that has a nominal operating voltage of 21.6 V and a 230 Ah capacity. The battery module may further comprise a plurality of sensors (not shown) that interface with a slave battery management system (BMS). The slave BMS receives data relating to the battery cells and battery module, for example cell voltage and cell temperature, and communicates the data to a master BMS 214 for the battery pack.

Preferably, the battery packs may be combined in a scalable manner by rack-mounting multiple packs into a battery rack. In some embodiments, a battery rack may comprise four stacks of four rows of battery packs. Such racks may have a maximum capacity of approximately 46 kWh. In some embodiments, a battery rack may comprise four stacks of three rows of battery packs. Such racks may have a maximum capacity of approximately 34 kWh.

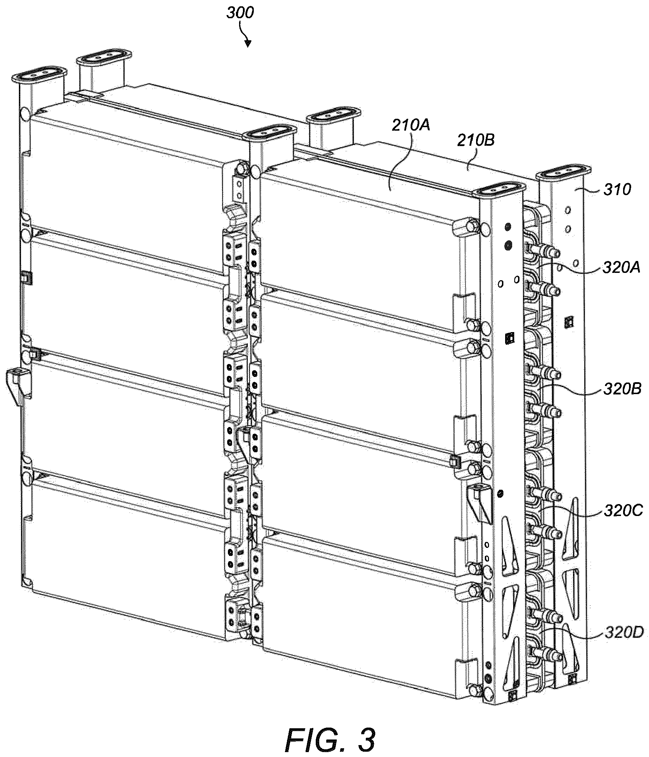

Figure 3 is a schematic diagram of an example battery rack 300 that comprises sixteen battery packs. However, it will be appreciated that battery racks may comprise more, or fewer, battery packs, and battery racks may house fewer than their maximum capacity of battery packs. For example, a battery rack that has space to accommodate four rows of battery packs may house fewer than the maximum of sixteen battery packs.

It will be appreciated that a plurality of battery racks 300 may be combined to provide a battery unit.

A first example battery unit comprises a total of 68 battery packs, with two racks of fourrowed battery packs, containing a total of 32 battery packs, and 3 racks of three-rowed battery packs, containing a total of 36 battery packs. In the first battery configuration, the 68 battery packs are configured as 34 battery packs in series in two parallel strings (a 34s2p configuration). Such a configuration may provide a nominal total DC voltage output of approximately 755 V with a total capacity of approximately 200 kWh.

A second example battery configuration comprises a total of 34 battery packs, with two racks of three-rowed battery packs, containing a total of 24 battery packs, and one rack containing a total of 10 battery packs. In the second battery configuration, the 34 battery packs may be configured as 17 battery packs in series in two parallel strings (a 17s2p configuration). Such a configuration may provide a reduced total capacity of approximately 99 kWh. Alternatively, the battery packs may be configured as a single string of 34 battery packs in order to be combined with the first example battery unit as a single 34s3p battery configuration. This allows the battery configurations to be complimentary and modular, providing scaling capacity in increments of 99 kWh.

In the example shown in Figure 3, the battery rack 300 comprises sixteen battery packs 210 rigidly mounted to a rack support structure 310. Preferably, the rack support structures 310 are in the form of vertical supporting members that securely retain the battery packs 210 in position while the vessel is in motion. In some embodiments, the rack support structure 310 is fabricated from aluminium alloy to mitigate any movements caused by the vessel or the electric propulsion system.

Battery systems suffer from a number of problems. First, marine vessels with electric propulsion systems require a high voltage power supply that occupies minimal onboard space. Accordingly, many such battery racks are typically connected together to provide power for the electric propulsion system. However, battery racks are intrinsically tall, high mass structures that are susceptible to dynamic vibrations and excitations. Such dynamic vibrations and excitations are commonplace in the marine environment and can have a deleterious effect on the interconnections between high voltage poles of adjacent battery racks. Typically, copper bus bars are used to connect adjacent battery packs however these bus bars provide a rigid connection which suffer from stress when subjected to dynamic vibrations and excitations. Accordingly, in preferred embodiments, flexible connections are provided between adjacent battery racks which advantageously reduces the impact of excitations on fatigue performance of the battery structure, increasing the durability, lifetime and safety of the battery.

Additionally, it is well known that batteries are susceptible to overheating, which may lead to thermal runaway. Accordingly, aspects of the invention include a plurality of thermal management systems in order to mitigate the risk of thermal runaway from occurring, and to limit the impact of a thermal runaway event that has occurred. These thermal management systems are described in further detail below.

In some embodiments, the battery system may comprise thermal propagation barriers. In preferred embodiments, the thermal propagation barriers comprise air gaps between adjacent battery packs and adjacent battery racks. For example, rows of battery packs in a rack may be spaced to provide an air gap of at least 12 mm to mitigate excess heat generated in a first battery pack from easily migrating to a neighbouring battery pack. As a further example, adjacent battery racks may be spaced to provide an air gap of at least 26 mm to mitigate excess heat generated in a first battery rack from easily migrating to a neighbouring battery rack.

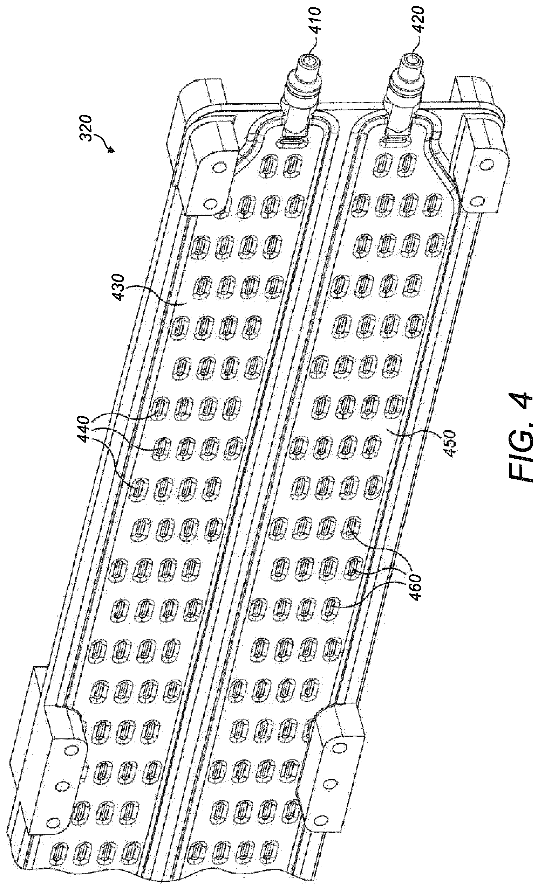

Embodiments of the invention may also comprise cooling plates. As shown in Figure 3, a battery rack 300 may comprise a plurality of cooling plates 320. The example of Figure 3 includes four cooling plates, which are labelled 320A - D. As shown in Figure 3, each cooling plate is provided between corresponding pairs of battery packs that are horizontally adjacent in the battery rack. For example, a first cooling plate 320A is provided between a first battery pack 210A and horizontally adjacent battery pack 210B. The cooling plates 320 will be described in more detail with reference to Figure 4.

Figure 4 shows an example cooling plate 320 which comprises a coolant inlet port 410, a coolant outlet port 420, an in-flow cooling channel 430 including indentations 440, and an out-flow channel 450 including indentations 450.

In preferred embodiments, the cooling plate 320 are integrated within battery racks such that they are sandwiched between adjacent battery packs on either side of the rack, as shown in Figure 3.

The cooling plates 320 provide both an in-flow channel 430 and an out-flow channel 450 to provide a 2-pass solution whereby the coolant passes each battery pack twice. Advantageously, this enables the thermal gradient to remain stable across each of battery packs that share the cooling plate, which helps maintain consistently balanced cell temperatures across the battery packs.

Each of the in-flow 430 and out-flow 450 channels comprises a plurality of indentations that project into the channels. This advantageously increases surface area and increases fluid turbulence within the coolant, which both enable thermal energy to be removed from the battery packs and distributed within the coolant more efficiently. Accordingly, the cooling plates are able to increase the heat transfer rate from the battery packs whilst reducing the required flow rate for the coolant. This reduces the power requirement of the coolant system while maintaining excellent control of battery cell temperatures.

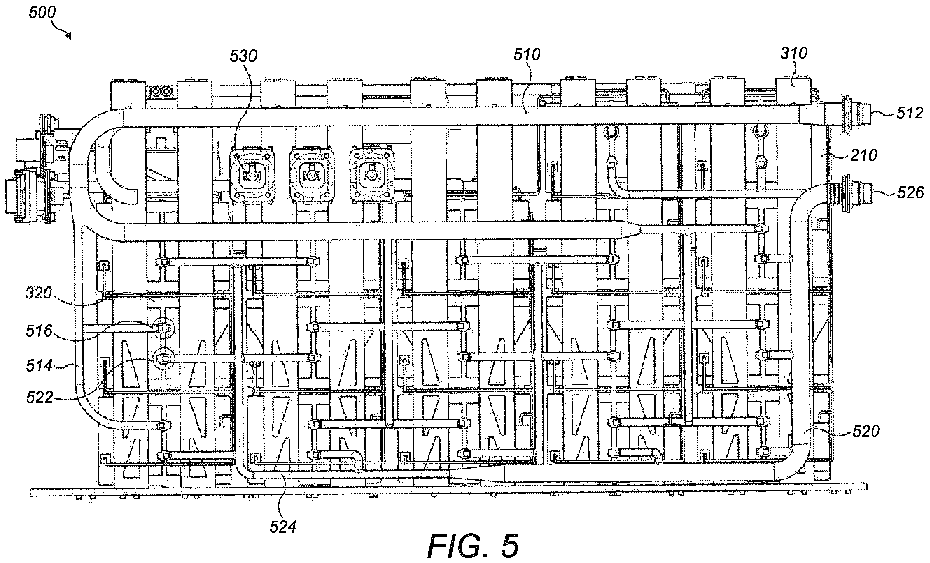

Figure 5 shows an example battery having a cooling circuit 500 that includes integrated cooling plates shown in Figure 4. The cooling circuit 500 is configured to manage the temperature of a plurality of battery packs 210 by removing thermal energy generated by each of the battery packs when in use. The example cooling circuit 500 shown in Figure 5 comprises a coolant insertion system 510, cooling plates 320 in thermal contact with one or more battery packs 210 that form part of a battery rack 310, and a coolant removal system 520. In preferred embodiments, the cooling circuit 500 further comprises a coolant pump that moves the coolant through the cooling circuit, a cooling fan that removes thermal energy from the heated coolant, and a condenser that removes thermal energy from the cooling circuit to prevent the cooling circuit from overheating.

The coolant insertion system 510 may comprise an inlet opening 512, a first manifold 514 for transporting coolant to a particular cooling plate 320, and a first cooling plate interface 516 for inserting the coolant into the cooling plate 320. The coolant removal system 520 may comprise a second cooling plate interface 522 for receiving heated coolant extracted from the cooling plate 320, a second manifold 524 for transporting the extracted coolant away from the cooling plate 320, and an outlet opening 526.

In preferred embodiments, the first manifold 514 and second manifold 524 are flexible to mitigate against stresses and strains exerted on the cooling circuit due to dynamic vibrations and excitations caused when the vessel is in motion. The flexible manifolds are configured to provide an equal pressure drop across each cooling plate 320 in the cooling circuit 500. This may be achieved by providing the active cooling elements of the cooling circuit in a reverse-return configuration such that the supply path length approximately equals the return path length. This advantageously ensures that the flow rate of coolant through each cooling plate 320 is identical, and so the thermal regulation of each battery pack 210 is, in turn, identical.

In preferred embodiments, the coolant is water and/or glycol. However, any other suitable coolant may be used.

The example battery shown in Figure 5 also includes a plurality of off-gas valves 530. For the purposes of this disclosure, an "off-gas" will be understood to be a gas that is produced as a by-product of a process, and which may be toxic, noxious and/or combustible. The off-gas valves 530 cooperate with an off-gas exhaust system (not shown) to remove these toxic and explosive gases produced by the battery packs when the packs overheat.

As indicated above, thermal runaway may cause a chain reaction of exothermic reactions within a battery module. Accordingly, aspects of the invention provide additional measures to remove excess thermal energy from the battery in an emergency. For small maritime vessels with high energy storage requirements, it is typically not practical to store large quantities of foam-based fire suppressants, and water-based suppression systems cannot be used with high voltage applications for safety reasons. Accordingly, aspects of the invention provide additional cooling capacity via the cooling plates and cooling circuit as an emergency measure in order to mitigate or limit a thermal runaway event in one or more battery cells.

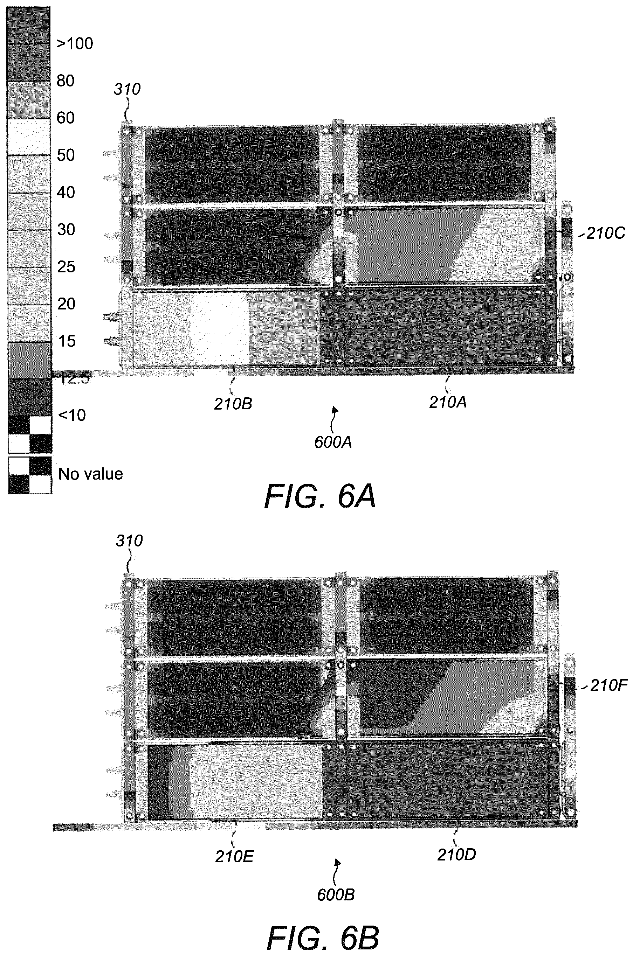

Figures 6A and 6B show the effect providing additional cooling power to a faulty battery rack compared to providing no additional cooling.

Figure 6A shows the results of a first simulation of the thermal energy propagation within a first battery rack 600A when no additional cooling is provided. In the first simulation, the battery rack 600A comprises six visible battery packs 210 that are retained within a rack support structure 310. The simulation models a first battery pack 210A overheating and undergoing thermal runaway, and predicts the thermal gradient within the battery rack 600A approximately 45 minutes after the thermal runaway event. As will be seen from Figure 6A, there is significant thermal energy propagation from the faulty battery pack 210A to the horizontally adjacent battery pack 21 0B. In the example shown in Figure 6A the temperature of the entire faulty battery pack 210A is in excess of 100 degrees Celsius, and the temperature gradient across the horizontally adjacent battery pack 210B is between approximately 30 to 80 degrees Celsius. Accordingly, there is a high likelihood that the horizontally adjacent battery pack 210B will also undergo thermal runaway. There is less significant thermal energy propagation from the faulty battery pack 210A to the vertically adjacent battery pack 210C, but battery pack 210C still experiences a significant temperature increase compared to the remaining three battery packs in battery rack 600A.

By contrast, Figure 6B shows the results of a second simulation of the thermal energy propagation within a second battery rack 600B when additional cooling is provided. In some embodiments, the total cooling power provided to the second battery rack 600B may be approximately 10 kW.

The second simulation has the same starting conditions as the first simulation. In other words, the second battery rack 600B comprises six visible battery packs 210 and a first battery pack 210D is simulated to overheat and undergo thermal runaway. The second simulation predicts the thermal gradient within the battery rack 600B approximately 45 minutes after the thermal runaway event when 10 kW of cooling power is provided via the cooling circuit 500 described above.

As will be seen from Figure 6B, although the temperature of the entire faulty battery pack 210D is in excess of 100 degrees Celsius, as for the first simulation, the temperature gradient across the horizontally adjacent battery pack 210E is significantly lower than in the first simulation. In the second simulation, the temperature gradient across the horizontally adjacent battery pack 210E is between 10 degrees or less to approximately 40 degrees Celsius. Similarly, significantly less thermal energy propagates to the vertically adjacent battery pack 210F.

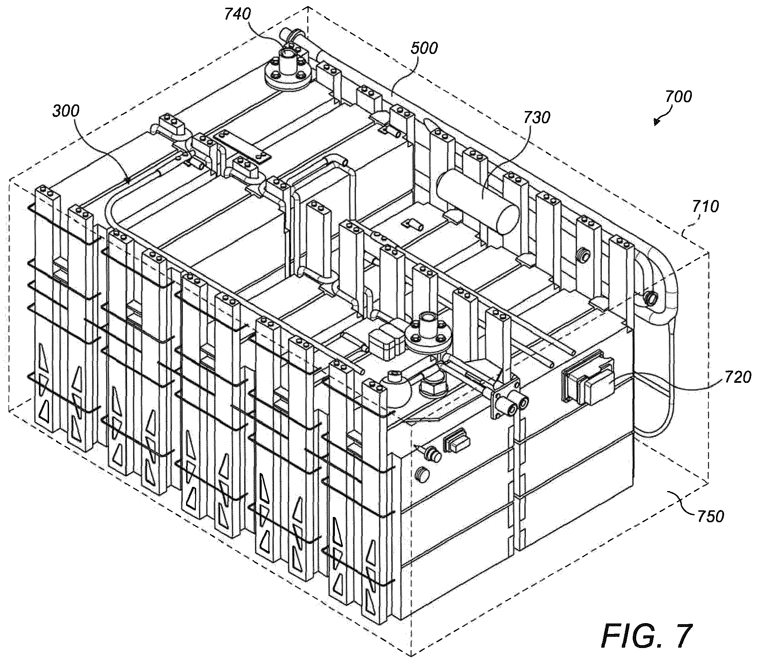

Figure 7 shows an example of a complete battery system 700 that includes several aspects described above and further aspects for improving the safety of the battery when in operation.

The example battery system 700 shown includes a plurality of battery racks 300 and a cooling circuit 500 within a battery enclosure 710. The battery system 700 further comprises high voltage electrical power cables 720, one or more fire suppressant modules 730, one or more dry break couplings 740, and one or more liquid absorption pads 750 that are also implemented within the battery enclosure 710.

The battery system 700 includes a first thermal regulation system and a second thermal regulation system. The first thermal regulation system is configured to regulate the temperature of battery cells both before and after a thermal runaway event, and may comprise one or more current interrupt devices and the cooling circuit 500. The second thermal regulation system is configured to regulate the temperature of battery cells after a thermal runaway event and may comprise the cooling circuit 500, one or more fire suppressant modules 730 and one or more dry break couplings 740.

In preferred embodiments, the fire suppressant module 730 may contain a first fire-suppressing material that is released within the battery enclosure 710 to prevent or extinguish a fire. In preferred embodiments, the fire suppressant module 730 contains a fire-suppressing aerosol.

On detecting a thermal event, such as thermal runaway or a critical cell temperature, the fire suppressant module 730 may be triggered to release the aerosol within the interior of the battery enclosure and thus prevent or suppress combustion by absorbing thermal energy from the battery packs and the ambient environment. The fire suppressant module 730 may be triggered automatically based on sensor data associated with the battery, or may be triggered manually by members of the crew.

In preferred embodiments, the fire suppressant module includes 120g of aerosol for a battery having a total capacity of 100kWh and includes 250g of aerosol for a battery having a total capacity of 200kWh.

In preferred embodiments, one or more dry break couplings 740 are provided for facilitating a gas tight interface between the interior and exterior of the battery enclosure 710. The dry break couplings 740 therefore allow for a second fire-suppressing material to be provided into the interior of the battery enclosure 710 from an external source. For example, emergency responders may be able to provide fresh water or fire suppressant foam at a high flow rate into a faulty battery enclosure via the dry break couplings 740 to mitigate or prevent further escalation of on-board fires.

In preferred embodiments, the operating voltage of the battery is reduced to below 400 V to reduce the risk of producing explosive hydrogen gas due to electrolysis.

In preferred embodiments, the battery system 700 also contains a liquid absorption pad 750 to regulate the humidity within the battery enclosure. It is particularly important in maritime environments to ensure that the battery packs do not experience excess moisture, which may lead to short circuits and component damage. Accordingly, liquid absorption pads may be provided to absorb excess moisture. In particular embodiments, the absorption capacity of the liquid absorption pad 750 matches the volume of liquid used in the coolant circuit 500. This advantageously results in any coolant leaks occurring within the battery enclosure being safely absorbed without compromising the operation of the battery. The humidity levels within the battery packs may be monitored by measuring the mass of the absorption pads 750 at regular intervals.

In preferred embodiments, the battery system 700 may also further comprise an off-gas detection and ventilation system (not shown), which has the following advantages.

First, Lithium-ion battery off-gas is known to be flammable and toxic and so presents an explosion risk in an enclosed space such as a battery enclosure within a vessel hull. The composition of the off-gas varies significantly across a spectrum of different chemistries, however off-gases from batteries generally have toxic and/or explosive properties.

Second, the detection of off-gases is a reliable predictor of an impending and irreversible thermal runaway event. This is because Lithium-ion battery failure generally follows four primary stages: initial abuse, off-gas generation, smoke generation and fire propagation. Accordingly, off-gas is produced and ultimately vented before thermal runaway within one or more battery cells. Accordingly, both the initial abuse of the battery cells and subsequent off-gas generation fall within a so-called "preventative region" during which time it is possible to prevent thermal runaway from occurring.

By way of example, Table 1 below shows the average response time in seconds of different types of sensor during the failure of a battery cell due to abusive test conditions.

**TABLE 1**

| | Off-gas release | Off-gas sensor | Thermal runaway | Cell voltage | LEL sensor |
|---|---|---|---|---|---|
| Time of occurrence | -381 | -371 | 0 | +7 | +28 |

As will be seen from Table 1, off-gas is released by the battery cells under testing on average 381 seconds before the cells undergo thermal runaway. The off-gas is detected by an off-gas sensor approximately 10 seconds later, on average 371 seconds (i.e. over 6 minutes) before the cells undergo thermal runaway. Abnormalities in the cell voltage are detected by a battery cell voltage detector on average 7 seconds after thermal runaway begins. A Lower Explosion Limit (LEL) sensor, which detects dangerous levels of combustible gas in an environment, triggered on average 28 seconds after thermal runaway occurred.

Accordingly, LEL sensor(s) and cell voltage-based detector(s) are unable to detect the initial stages of thermal runaway, as both methods are triggered after a thermal runaway event has occurred.

Preferred embodiments of the invention therefore include an off-gas sensor, such as a Li-ion Tamer sensor, and may further include a smoke detector in order to provide a reliable means of detecting the early indicators of an imminent thermal runaway event. Action may then be taken to mitigate the abuse conditions, for example electrical abuse conditions such as over-charging battery cells, to thereby prevent thermal runaway from occurring.

Preferably, the off-gas sensor is placed as near the battery racks as possible within the battery enclosure 710 to ensure accurate early detection of off-gas production. Accordingly, off-gas sensors may be integrated within the battery enclosure 710.

As indicated above, Lithium-Ion battery cells may produce large quantities of toxic and flammable off-gas when subjected to abuse conditions. It is critical for the safety of the crew and passengers onboard the vessel that the off-gas is controlled and dispersed safely to outside of the vessel.

Typical methods of managing explosion risks rely on mechanically venting the room in which a battery is stored and calculating the Air Change per Hour (ACPH) to determine the amount of air introduced into the room in a given amount of time. However, such methodologies are impractical for small battery systems in an enclosed space, such as those according to aspects of the invention.

Instead, embodiments of the invention provide a sealed battery enclosure that limits the amount of oxygen that may enter the enclosure while providing an off-gas ventilation system. The off-gas ventilation system may include one or more battery pack venting valves 530 (shown in Figure 5), an off-gas manifold in communication with the off-gas valves 530 and a ventilation pipe network in communication with the exterior of the vessel. The off-gas valves 530 are multipurpose membranes that allow pressure within the battery enclosure 710 to be equalised with the atmosphere to thereby prevent over-pressurisation during off-gas venting.

In the event of off-gases building up within the battery enclosure, the gases vent through the off-gas valves 530 at a threshold pressure and are transported away from passenger areas of the vessel via the off-gas manifold and ventilation pipes and expelled to the local environment.

In preferred embodiments, the threshold pressure for the off-gas valves is approximately 300mBar. In preferred embodiments, the off-gas ventilation system is able to remove gasses produced within the battery enclosure up to a temperature of 300 degrees Celsius.

Further safety mechanisms of the battery system 700 may include active circuit breakers, current interrupt devices and isolation monitoring systems. These advantageously enable the battery to be reconfigured or shutdown in order to manage detected abuse conditions or thermal runaway. In preferred embodiments of the invention, each battery pack includes one or more further safety mechanisms that are integrated within the battery pack so provide a more granular level of control of the battery.

In some embodiments, the current interrupt device(s) may comprise a High Voltage Contactor configured to provide safe connection and disconnection of the battery to other components of the electrical propulsion system.

The battery system may include a plurality of fuses. A first set of fuses may handle short circuit currents exceeding approximately 5 kA. Typical fuse melting times for the first set of fuses may range from approximately 2ms to 6ms. A second set of fuses may handle short circuit currents between approximately 1 kA and 6 kA. The second set of fuses may be pyrotechnic fuses that are configured to break an electrical connection in response to a trigger signal. In preferred embodiments, the pyrotechnic fuse can pre-emptively electrically isolate two components and may have a switching time of approximately 1ms or less.

The battery system may also comprise one or more high accuracy, high resolution current sensing devices. Advantageously, this may provide a two-stage current interrupt process whereby a short circuit is initially handled by the first set of fuses while partial short circuits are handled by the second set of fuses. The separation of functionality for the fuses accordingly requires high accuracy current measurement via the current sensing device(s).

The battery system may also include a manual service disconnect (MSD) that is configured to disconnect the battery and protect it from short circuits while maintenance is being performed on the battery and/or electrical propulsion system.

### CONTROL SYSTEMS

Having described various aspects of the battery system, there is provided below a description of how certain embodiments of the invention comprise control modules for configuring the battery system to mitigate the risk of thermal runaway within the battery system, or limit the consequences of thermal runaway within the battery system.

A common risk assessment tool used throughout the transport industry is "bowtie analysis". A bowtie analysis identifies a number of different safety risk elements that revolve around a central hazard. In the context of this invention, the central hazard will be understood to be thermal runaway in one or more battery cells.

A graphical representation of the central hazard indicates a nominal moment when the hazard occurs. Safety risk elements that are graphically shown before the central hazard represent preventative, or pre-emptive, measures that may be taken in order to mitigate or prevent the central hazard from occurring. Safety risk elements that are graphically shown after the central hazard represent limitation, or reactive, measures that may be taken in order to mitigate or overcome the consequences of central hazard occurring.

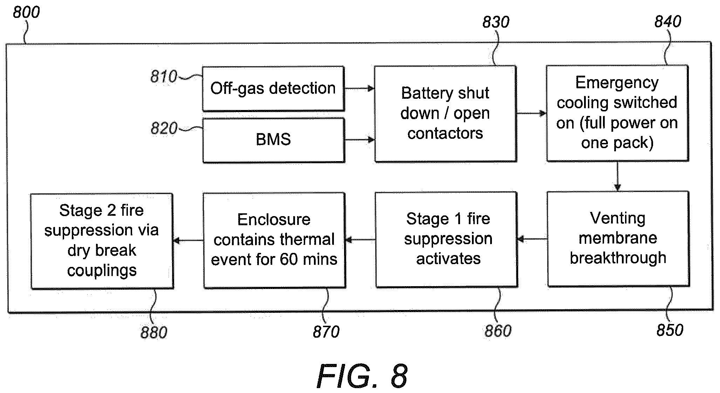

The example schematic diagram shown in Figure 8 provides an overview of the process flow of the use of various safety systems described above that mitigate the risk or completely prevent accidental or unwanted delivery of high current in a battery, which may in turn lead to thermal runaway. Figure 8 therefore provides an example process flow of detecting, preventing and managing thermal events within a battery system.

The example flow diagram of Figure 8 shows a safety process 800 that comprises pre-emptive measures including detecting off-gas 810, a battery management system 820, shutting down the battery 830, enabling an emergency cooling system 840, enabling toxic and explosive gases to vent from the battery via a venting membrane 850.

The safety flow 800 further comprises limitation measures including activating a first fire suppression system 860, containing the extent of the thermal event 870 via the battery enclosure, and activating a second fire suppression system 880.

In preferred embodiments, a control module may be configured to manage the above pre-emptive measures in order to mitigate the risk of a thermal event or limit the consequences of a thermal event. In some embodiments, the control module is a Vessel Control Unit (VCU) that configures the battery system as further described herein.

As described above, detecting off-gas 810 may be achieved with an off-gas detector that is configured to detect toxic and combustible gases produced by battery cells when subjected to abusive conditions. The off-gas detector may communicate with a controller that enables pre-emptive or reactive action to be taken to mitigate the spread of thermal energy in the battery.

The Battery Management System (BMS) 820 is configured to manage the battery cells, modules, and/or packs to ensure that the battery as a whole operates within a defined Safe Operating Area (SOA). In preferred embodiments, the BMS 820 ensures the battery operates within the SOA by controlling a first thermal regulation system based on a comparison between a set of calculated parameters and a corresponding set of threshold values, as further discussed below.

In preferred embodiments, the threshold values may be predetermined such that one or more of the calculated parameters exceeding a corresponding threshold value is indicative of a thermal runaway event. In that event, the BMS controls the second thermal regulation system to limit the consequences of the thermal event, as further described below. Conversely, if the calculated parameters do not exceed the threshold value, the BMS controls the first thermal regulation system to prevent a thermal runaway event occurring by endeavouring to ensure the battery operates within its SOA. This may be achieved by defining the SOA with one or more operation values that are associated with the safe operating limits for the battery when in use. For example, a first operation value may define an upper operating limit for the temperature of any individual battery cell. It will be appreciated that further operation values may be defined for each of a plurality of parameters associated with the safe operation of the battery. A comparison may be made between the calculated parameters and a corresponding operational value, and the first thermal regulation system may be adjusted accordingly.

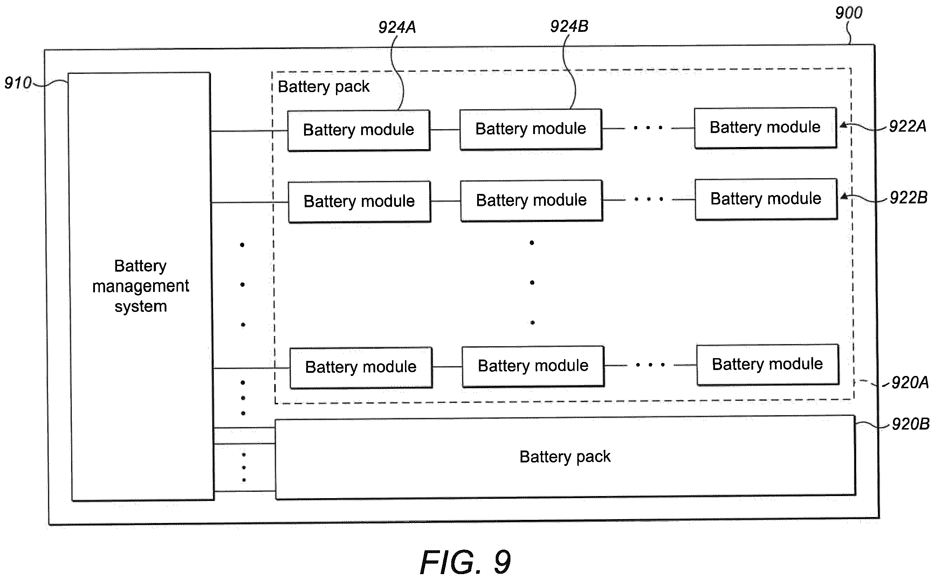

Figure 9 shows a schematic diagram of a BMS system 900 that comprises a BMS module 910 and a plurality of battery packs 920. In the example shown in Figure 9, a first battery pack 920A includes a plurality of battery racks 922 that each include a plurality of battery modules 924 as described above.

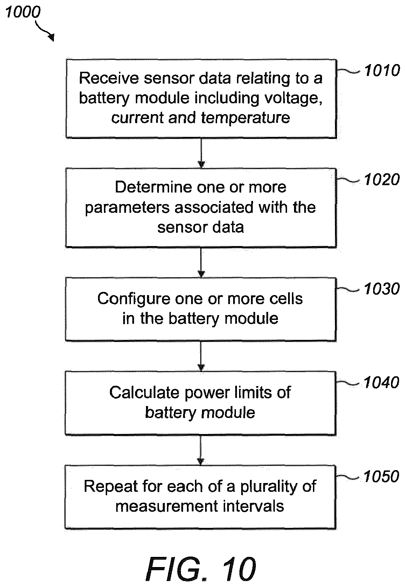

Figure 10 provides a flow diagram of the example processes 1000 undertaken by the BMS module 910 according to aspects of the invention.

In a first step 1010, the BMS module 910 receives sensor data relating to a battery module 924 including the voltage, current and temperature.

In a second step 1020, the BMS module 910 calculates one or more parameters associated with the sensor data. In some embodiments, the BMS module 910 calculates electrical parameters associated with at least one battery module and/or temperature parameters associated with at least one battery module. Electrical parameters may include one or more of the following parameters for each battery module based on the sensor data: a state of charge (SOC); a state of health (SOH); a state of function (SOF); power availability; total power cycles; energy throughput; and cell impedance. Temperature parameters may include the battery core temperature for each battery module based on the sensor data. In some embodiments, the sensor data and calculated parameters may be stored in a database.

In a third step, the BMS module 910 configures one or more battery cells in the battery module 1024. This may be achieved by analysing the sensor data and calculated parameters to compare battery cells in order to balance the relative voltage and SOC of each battery cell. This enables the BMS module 910 to identify cells that are, or are at risk of becoming, over-charged or under-charged. When the BMS module 910 identifies an imbalance between battery cells, the BMS module 910 may enable cell-to-cell balancing to be performed. This may be achieved passively, for example using shunt resistors to expend excess charge stored in a battery cell. In other embodiments, the BMS 910 communicates with a battery charger that recharges the battery cells in order to configure the flow of charge to the battery. This may enable additional charge to be provided to under-charged battery cells or to prevent excess charge from being provided to over-charged battery cells.

In a fourth step 1040, the BMS module 910 calculates power limits for each battery module 1024 given the current power usage and battery cell conditions.

Finally, in a fifth step 1050, the BMS module 910 repeats the above steps for each of a plurality of measurement intervals 1050.

The BMS module 910 may be further configured to actively monitor the state of the battery to protect against abusive conditions arising from over-voltage, under-voltage, over-current, and excess temperature within a particular battery cell. The BMS module 910 may further provide earth fault monitoring to detect whether the high voltage battery has been grounded by an electrically conductive object that contacts the battery.

In some embodiments, the BMS module 910 may be further configured to communicate with a battery thermal management system (BTMS) for controlling a cooling circuit to ensure that the thermal condition of each battery cell remains approximately constant during normal operation, as further described below.

In some embodiments, the BMS module 910 may cooperate with current interrupt devices, such as battery contactors, in order to disable the current flow to a particular battery cell, module or pack. This may be achieved by providing an output from the off-gas detector and the BMS module 910 to the control module. In preferred embodiments, the control module configures the high voltage contactors based on the outputs of the off-gas detector and/or the BMS. If off-gas is detected, or the BMS detects abuse conditions for one or more battery cells, the high voltage contactors may be configured to open in order to disconnect one or more battery packs 300 from the battery system 700. In preferred embodiments, if the high voltage contactors fail or are unable to open then the control module may trigger one or more pyrotechnic fuses that connect each pack to the battery system 700 to ensure the faulty battery pack is provided with an open circuit voltage.

Advantageously, this enables embodiments of the invention to remove the cause of an electrical abuse condition before a battery cell reaches the critical thermal runaway point. Additionally, the modularity of aspects of the invention enable only certain parts of a particular battery system to be electrically isolated or disconnected, while retaining some battery capacity for providing critical vessel functions, such as navigation systems and propulsion systems.

As indicated above, in some embodiments emergency cooling 840 may be provided by enabling the control module to configure the battery cooling circuit 500.

In normal operation, most components of the battery cooling circuit 500 will be run via the low voltage (12V) system with the exception of a refrigerant compressor, which is operated on the high-voltage (HV) DC link. However, when emergency cooling is switched on the control module enable the provision of additional cooling by triggering one or more current interrupts to divert additional power to the battery cooling circuit 500. Accordingly, power from some or all of the remaining operable battery packs may be provided to the cooling circuit 500 and in some embodiments a total cooling power in the region of 10 kW may be achieved, even in high ambient temperature conditions.

The additional power enables embodiments of the invention to run all components of the cooling circuit 500, including the water pump feeding the faulty pack, the refrigerant compressor, condenser fan and water/glycol cooling fan, at peak power.

This enables maximum coolant flow to be provided to the battery pack, module or cell in fault condition, and the maximum amount of thermal energy to be extracted in as little time as possible. In some embodiments, the flow of coolant may be diverted towards the pack in fault condition to ensure maximum coolant flow to the battery pack, module or cell in fault condition.

In this way, embodiments of the invention are able to prevent the complete loss of a faulty battery pack for at least 45 mins after a thermal runaway event is detected, allowing sufficient time for the vessel to be safely evacuated.

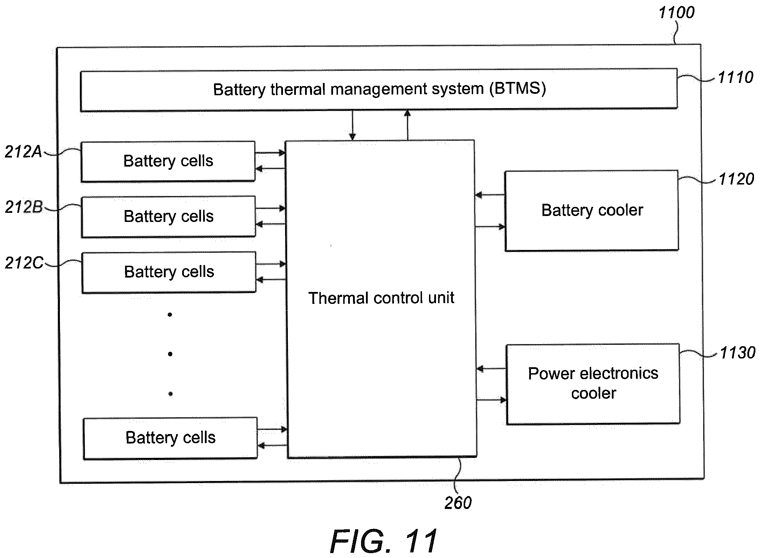

In some embodiments, the control module may communicate with a battery thermal management system (BTMS) in order to provide emergency cooling to a battery pack, as shown in Figure 11.

Figure 11 shows a schematic diagram of a BTMS system 1100 that comprises a BTMS module 1110, thermal control unit 260, battery cooler 1120, power electronics cooler 1130, and a plurality of battery cells 212.

The BTMS module 1110 is configured to manage the temperature of the plurality of battery cells 212 to ensure the cells operate within their SOA at all times, while also ensuring that the battery pack delivers the required power required in a variety of ambient conditions. This may be achieved based on signals received by the BTMS module 1110 from the VCU control module and/or signals received from the thermal control unit 260, which may be provided by temperature sensors within the battery modules.

The BTMS module 1110 may communicate with the thermal control unit 260 to configure the cooling circuit in order to implement both passive and active cooling modes for low and high ambient temperature conditions.

In preferred embodiments, the active cooling system comprises a refrigerant compressor, condenser, expansion valve and a heat exchanger to evaporate refrigerant and provide excellent cooling performance in high ambient temperature conditions. The active circuit may be configured to boost the passive cooling circuit using the heat exchanger, and enables embodiments of the invention to operate at an upper ambient temperature of approximately 45 degrees Celsius. If ambient temperatures are lower than approximately 20 degrees Celsius, a passive cooling system is used to maintain system temperature using a cooling circuit only and a coolant-to-air heat exchanger, which advantageously improves component longevity and reduces auxiliary power consumption.

As described above, significant quantities of off-gas may be produced by battery cells in the lead up to a thermal runaway event. Accordingly, as also described above, embodiments of the invention provide one or more off-gas valves 530 to enable toxic and combustible gasses to break through the battery enclosure 710 via a venting membrane 850. This prevents excessive build-up of these gasses within an enclosed space within the vessel, and facilitates the removal of these gasses from the vessel via an off-gas ventilation system.

If, in spite of the above described safety measures, a thermal runaway event occurs, then the control module may be further configured to enable reactive measures in order to limit the consequences of the thermal runaway event.

On early detection of a thermal event from the off-gas sensor data via the off-gas detection system 810 and/or temperature sensor data via the BMS 820, the control module may activate a first fire suppression system 860.

The first fire suppression system may comprise one or more fire suppressant modules 730 that contain a first fire-suppressing material that is released into the battery enclosure 710 to prevent or extinguish a fire. In embodiments where the fire-suppressing material is an aerosol, 120g of aerosol may be provided for battery packs having a capacity of up to 100 kWh. For battery packs having a capacity of between 100 kWh and 200kWh, 250g of aerosol may be provided.

In preferred embodiments, the first fire suppression system is activated in combination with the emergency cooling system such that additional cooling power is provided to the battery pack in advance of thermal runaway occurring, and the first fire suppression system is activated at the same time or after one or more battery cells enter thermal runaway.

In preferred embodiments, if a temperate increase rate and/or a battery cell temperature reach a threshold value then the control module may send an alert to the crew in order to enable the crew to manually activate the first fire suppression system. In preferred embodiments, the threshold value for the temperature increase rate may be approximately 25 degrees Celsius per second and the threshold value for the battery cell temperature may be approximately 100 degrees Celsius.

In preferred embodiments, the battery enclosure 710 is configured to contain the extent of the thermal event 870 for up to 60 minutes.

In preferred embodiments, the battery enclosure has an ingress protection (IP) rating. In some embodiments the IP rating is at least IP67, which guarantees complete protection against solids, such as dust, and water when immersed at a depth of up to 1 meter for 30 minutes. Ensuring the battery enclosure 710 has an IP rating allows improved containment of a thermal event and improves the effectiveness of detection and fire suppression systems. It also prevents a ready supply of oxygen into the battery enclosure, and so while the production of off-gas may result in a build-up of combustible gases within the enclosure the lack of oxygen prevents these gases from combusting thus ensuring the propagation of thermal energy between battery racks and the temperature within the battery enclosure is reduced in the event of thermal runaway. This advantageously provides crew members with additional time to safely evacuate the vessel in an emergency.

On early detection of a thermal event from the off-gas sensor data via the off-gas detection system 810 and/or temperature sensor data via the BMS system 820, the control module may activate a first fire suppression system 860.

It is not uncommon for thermal events within a battery system to continue for hours or even days if all the latent heat produced cannot be effectively removed.

Accordingly, in preferred embodiments of the invention each battery pack includes dry break couplings for receiving a second fire suppressant material that is provided externally to the battery enclosure 710. For example, the second fire suppressant material may be provided by emergency responders or other support crew.

In preferred embodiments, the second fire suppressant material may be fresh water or a high flow foam fire suppressant. In preferred embodiments, the MSD may be configured to disconnect the battery such that a battery pack voltage does not exceed 400 V which advantageously reduces the risk of hydrogen production when using fresh water as a fire suppressant.

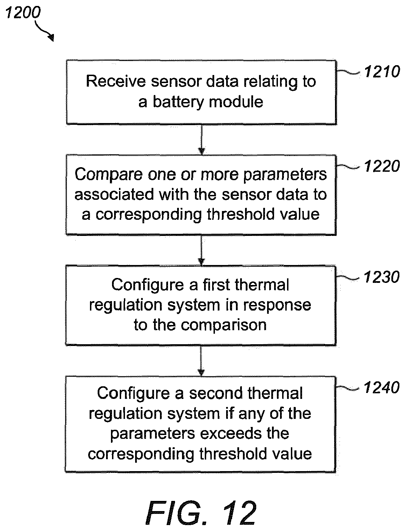

Figure 12 shows an example flow diagram 1200 of the steps performed by embodiments of the invention in accordance with the foregoing disclosure.

In a first step 1210, sensor data relating to a battery module is received. As indicated above, one or more parameters may be calculated based on the sensor data.

In a second step 1220, a comparison is made between one or more parameters associated with the sensor data and a corresponding threshold value. Accordingly, the one or more parameters provide an indication of the performance and health of the battery. The battery may therefore be monitored to determine whether one or more battery cells in the battery are at risk of approaching a thermal runaway event based on known threshold values that define a Safe Operating Area (SOA) for the battery modules. Accordingly, the comparison is able to provide an indication of whether one or more battery modules are undergoing abusive conditions and so may be at risk of entering thermal runaway.

In a third step 1230, a first thermal regulation system is configured in response to the comparison. Accordingly, if the comparison indicates that one or more battery modules are at risk of entering thermal runaway the first thermal regulation system is activated in order to prevent the one or more battery modules from entering thermal runaway. As indicated above, the first thermal regulation system may comprise current interrupt devices and/or a battery cooling circuit.

In a final step 1240, a second thermal regulation system is configured if any of the parameters exceeds the corresponding threshold value.

Accordingly, if the comparison indicates that thermal runaway has occurred in one or more battery modules then the second thermal regulation system is activated in order to limit the impact of the thermal runaway event. As indicated above, the second thermal regulation system may comprise a first fire suppression system and/or a second fire suppression system.

The above detailed description of embodiments of the invention are not intended to be exhaustive or to limit the invention to the precise form disclosed. For example, while processes or blocks are presented in a given order, alternative embodiments may perform routines having steps, or employ systems having blocks, in a different order, and some processes or blocks may be deleted, moved, added, subdivided, combined, and/or modified. Each of these processes or blocks may be implemented in a variety of different ways. Also, while processes or blocks are at times shown as being performed in series, these processes or blocks may instead be performed in parallel, or may be performed at different times.

The teachings of the invention provided herein can be applied to other systems, not necessarily the system described above. The elements and acts of the various embodiments described above can be combined to provide further embodiments.

While some embodiments of the inventions have been described, these embodiments have been presented by way of example only, and are not intended to limit the scope of the disclosure. Indeed, the novel methods and systems described herein may be embodied in a variety of other forms. Furthermore, various omissions, substitutions and changes in the form of the methods and systems described herein may be made without departing from the spirit of the disclosure.

## Claims

1. A method for a battery safety system, the method comprising:
receiving sensor data relating to one or more battery modules, the sensor data including a measurement of an off-gas released by the one or more battery modules;
comparing one or more parameters associated with the sensor data to a corresponding threshold value;
configuring a first thermal regulation system in response to the comparison; and
configuring a second thermal regulation system if any of the one or more parameters exceeds the corresponding threshold value.

2. The method of claim 1, wherein configuring the first thermal regulation system and/or the second thermal regulation system decreases the temperature of one or more battery cells in at least one of the battery modules, preferably wherein the first thermal regulation system comprises a cooling circuit that provides coolant to one or more battery modules to thereby decrease the temperature of the one or more battery modules, and preferably wherein the second thermal regulation system configures the cooling circuit to provide maximum cooling power to at least one of the battery modules.

3. The method of claim 1, wherein the first thermal regulation system controls the electric current provided to and/or from at least one of the battery modules, or wherein the first thermal regulation system is configured based on the sensor data indicating the presence of an off-gas, or wherein the second thermal regulation system is configured to provide one or more fire suppressant materials to the one or more battery modules.

4. The method of claim 1, wherein at least a component of the first thermal regulation system and/or second thermal regulation system can be manually controlled by a user.

5. The method of claim 1, wherein configuring the first thermal regulation system reduces the likelihood of the one or more parameters exceeding the corresponding threshold value.

6. The method of claim 1, further comprising calculating the one or more parameters based on the sensor data.

7. The method of claim 1, wherein the parameters comprise one or more of: electrical parameters associated with at least one battery module, and temperature parameters associated with at least one battery module, or wherein the parameters are associated with one or more of a state of charge for one or more battery modules; a state of health for one or more battery modules; a state of function for one or more battery modules; the power availability for one or more battery modules; a total power cycles for one or more battery modules; an energy throughput for one or more battery modules; a cell impedance for one or more battery modules; and the battery core temperature for one or more battery modules, or wherein each parameter is associated with one or more operation values that define a safe operation range for the battery, preferably wherein one or more of the parameters exceeding the corresponding operation values is indicative of mechanical, electrical, and/or thermal abuse conditions, or wherein one or more of the parameters exceeding the corresponding threshold value is indicative of a thermal runaway event.

8. The method of claim 1, further comprising electrically isolating one or more battery modules with a manual service disconnect, or further comprising providing one or more internal barriers between adjacent battery modules to reduce the propagation of thermal energy.

9. A battery safety system comprising:
a plurality of sensors for providing sensor data relating to one or more battery modules, the plurality of sensors including one or more off-gas sensors;
a battery management system for comparing one or more parameters associated with the sensor data to a corresponding threshold value; and
a first thermal regulation system and a second thermal regulation system;
wherein the first thermal regulation system is configured in response to the comparison, and the second thermal regulation system is configured if any of the one or more parameters exceeds the corresponding threshold value.

10. A battery system comprising:
one or more battery modules;
a plurality of sensors for providing sensor data relating to the one or more battery modules, the plurality of sensors including one or more off-gas sensors;
a battery management system for comparing one or more parameters associated with the sensor data to a corresponding threshold value; and
a first thermal regulation system and a second thermal regulation system;
wherein the first thermal regulation system is configured in response to the comparison, and the second thermal regulation system is configured if any of the one or more parameters exceeds the corresponding threshold value.

11. The battery system of claim 10, further comprising a battery rack support structure configured to receive the one or more battery modules to form a battery rack, and preferably further comprising at least one flexible connector between adjacent battery racks, or further comprising a liquid absorption pad, or further comprising a battery enclosure for containing the sensors and battery modules.

12. The battery system of claim 10, wherein the battery enclosure provides protection against the ingress of fluid and/or particles from outside of the enclosure, or wherein at least one of the battery modules comprises at least one Li-ion battery cell.

13. The battery safety system of claim 9 or the battery system of claim 10, wherein one or more of the first thermal regulation system and the second thermal regulation system comprises a cooling circuit configured to remove thermal energy from one or more battery modules, preferably further comprising a battery thermal management system configured to control the cooling circuit, or wherein the cooling circuit comprises one or more cooling plates, or wherein the first thermal regulation system comprises one or more of an isolation monitoring system, an active circuit breaker, and an electrical current interrupting device configured to interrupt electric current to the one or more battery modules, preferably wherein the one or more current interrupting devices comprises a high voltage contactor, a fuse, a manual disconnect and/or a pyrotechnic fuse.

14. The battery safety system of claim 9 or the battery system of claim 10, wherein the second thermal regulation system comprises a fire suppressant module configured containing a first fire suppressant material, preferably wherein the first fire suppressant material is a fire suppressant aerosol, or wherein the second thermal regulation system comprises one or more dry break couplings configured to provide a second fire suppressant material to the one or more battery modules, and preferably wherein the second fire suppressant material is fresh water or a firesuppressant foam.

15. The battery safety system of claim 9 or the battery system of claim 10, further comprising one or more valves configured to enable the release of an off-gas, the one or more valves being in communication with an off-gas ventilation manifold.
